# EUROPEAN PATENT APPLICATION

(11) **EP 1 937 035 A2**
(43) Date of publication of application: **25.06.2008**
(21) Application number: 07122773.0
(22) Date of filing: 10.12.2007
(51) Int. Cl.: H05B 33/08

(54) **Display apparatus and control method thereof**

(30) Priority: 22.12.2006 KR 20060132950
(71) Applicant: Samsung Electronics Co., Ltd, Suwon-si, Gyeonggi-do 443-742 (KR)
(72) Inventor: kang, Ho-woong, Yongin-si Gyeonggi-do (KR)
(74) Representative: Grootscholten, Johannes A.M.

(57) **Abstract**

A display apparatus and method are provided, the display apparatus includes: a display part; a backlight unit which illuminates the display part locally; and a control part which controls the backlight unit to illuminate based on an input video signal, and changes a color information of the input video signal so that an operating state of the backlight unit is displayed on the display part.

## Description

### BACKGROUND

### Field of Invention

A display apparatus and a control method thereof consistent with the present invention relate to a backlight unit including a light emitting diode (LED) being capable of adjusting brightness locally.

### Description of the Related Art

Recently, a display apparatus having a screen of which is illuminated by a backlight unit such as an LCD monitor has been widely used. The display apparatus adjusts the brightness of the screen by adjusting the brightness of the backlight unit.

A related art display apparatus uses a fluorescent lamp emitting a white light such as a cold cathode fluorescent lamp (CCFL), a hot cathode fluorescent lamp (HCFL), etc., for a backlight unit.

However, the display apparatus using the fluorescent lamp can not express all areas of a color gamut due to an optical property of a light emitted from the fluorescent lamp.

Accordingly, a display apparatus using an LED for the backlight unit to adjust the brightness of the backlight unit locally has been extensively used. If the LED is used for the backlight unit, since a bright region can be made brighter and a dark region darker, contrast can be maximized in comparison with the fluorescent lamp type used in the related art.

However, in general, a user does not fully understand the LED backlight unit type. Accordingly, a user can not directly know superiority of a product and distinction from other products.

### SUMMARY

Accordingly, it is an aspect of the present invention to provide a display device and a control method thereof directly showing a user the performance of a product comprising a light emitting diode for a backlight unit so that the user can easily know a merit of employing the light emitting diode for the backlight unit.

Another aspect of the present invention provides a display apparatus and a control method thereof allowing a user to easily distinguish the superiority of a product when the user visits a shop to buy the product, thereby improving the sales of the product.

The foregoing and/or other aspects of the present invention can be achieved by providing a display apparatus, comprising: a display part; a backlight unit which illuminates the display part locally; and a control part which controls the backlight unit to illuminate based on an input video signal, and changes a color information of the input video signal so that an operating state of the backlight unit is displayed on the display part.

According to an aspect of the invention, the control part changes the color information of the input video signal which corresponds to a local region of the display part into one of white, red, green and blue colors.

According to an aspect of the invention, the display apparatus further comprises a user input part which selects a demo function which displays the operating state of the backlight unit on the display part, wherein the control part changes the color information of the input video signal if the demo function is selected from the user inputting part.

According to an aspect of the invention, the control part changes the color information of the input video signal which corresponds to the local region of the display part so that the operating state of the backlight unit is displayed on the local region of the display part.

According to an aspect of the invention, the control part changes a difference between a local maximum value and a local minimum value of brightness in a local region of the backlight unit to adjust contrast of the backlight unit.

According to an aspect of the invention, the control part changes a local average value of brightness in a local region of the backlight unit to adjust brightness of the backlight unit.

According to an aspect of the invention, the backlight unit comprises a plurality of light emitting diodes (LED), and an LED driving part which drives the light emitting diodes.

The foregoing and/or other aspects of the present invention can be achieved by providing a control method of a display apparatus which comprises a display part and a backlight unit which illuminates the display part locally, comprising: illuminating the backlight unit based on an input video signal if the video signal is input; and changing a color information of the input video signal so that an operating state of the backlight unit is displayed on the display part.

According to an aspect of the invention, the changing the color information of the video signal comprises changing the color information of the input video signal into one of white, red, green and blue colors.

According to an aspect of the invention, the changing the color information of the video signal comprises changing the color information of the input video signal if a demo function, which displays the operating state of the backlight unit on the display part is selected by a user.

According to an aspect of the invention, the changing the color information comprises changing the color information of the input video signal which corresponds to a local region of the display part so that the operating state of the backlight unit is displayed on the local region of the display part.

According to an aspect of the invention, the backlight unit comprises a plurality of light emitting diodes (LED), and an LED driving part which drives the light emitting diodes.

The foregoing and/or other aspects of the present invention can be achieved by providing a display apparatus, comprising: a liquid crystal displaying part; a liquid crystal driving part which drives the liquid crystal displaying part; a backlight unit which illuminates the liquid crystal displaying part locally; and a control part which controls the backlight unit to emit a light based on an input video signal, and controls the liquid crystal driving part so that the light emitted from the backlight unit is transmitted uniformly to each local region of the liquid crystal displaying part.

According to an aspect of the invention, the liquid crystal displaying part comprises a liquid crystal, and the control part controls the liquid crystal driving part so that a refractive index of the liquid crystal which corresponds to each local region of the liquid crystal displaying part is the same.

According to an aspect of the invention, the control part controls the liquid crystal driving part so that each local region of the liquid crystal displaying part displays one color among white, red, green and blue colors.

According to an aspect of the invention, the display apparatus further comprises a user input part which selects a demo function in which the light emitting from the backlight unit is displayed to the liquid crystal displaying part, wherein the control part controls the liquid crystal driving part so that the light emitted from the backlight unit is transmitted uniformly to each region of the liquid crystal displaying part if the demo function is selected from the user input part.

According to an aspect of the invention, the control part controls the liquid crystal driving part so that the refractive index of a liquid crystal which corresponds to each local region of the liquid crystal displaying part is the same.

According to an aspect of the invention, the control part changes a difference between a local maximum value and a local minimum value of brightness in a local region of the backlight unit to adjust contrast of the backlight unit.

According to an aspect of the invention, the control part changes a local average value of brightness in a local region of the backlight unit to adjust brightness of the backlight unit.

According to an aspect of the invention, the backlight unit comprises a plurality of light emitting diodes (LED), and an LED driving part which drives the light emitting diodes.

### BRIEF DESCRIPTION OF THE DRAWINGS

The above and/or other aspects of the prevent invention will become apparent and more readily appreciated from the following description of the exemplary embodiments, taken in conjunction with the accompanying drawings, in which:
FIG. 1 is a control block diagram of a display apparatus according to an exemplary embodiment of the present invention;
FIG. 2 illustrates a configuration of a liquid crystal displaying part of the display apparatus according to the exemplary embodiment of the present invention;
FIGs. 3A to 3C illustrate the liquid crystal displaying part displaying a video signal according to a demo function according to the exemplary embodiment of the present invention; and
FIG. 4 is a flowchart illustrating a control process of the display apparatus according to the exemplary embodiment of the present invention.

### DETAILED DESCRIPTION OF EXEMPLARY EMBODIMENTS

Reference will now be made in detail to the exemplary embodiments of the present invention, examples of which are illustrated in the accompanying drawings, wherein like reference numerals refer to like elements throughout. The exemplary embodiments are described below so as to explain the present invention by referring to the figures.

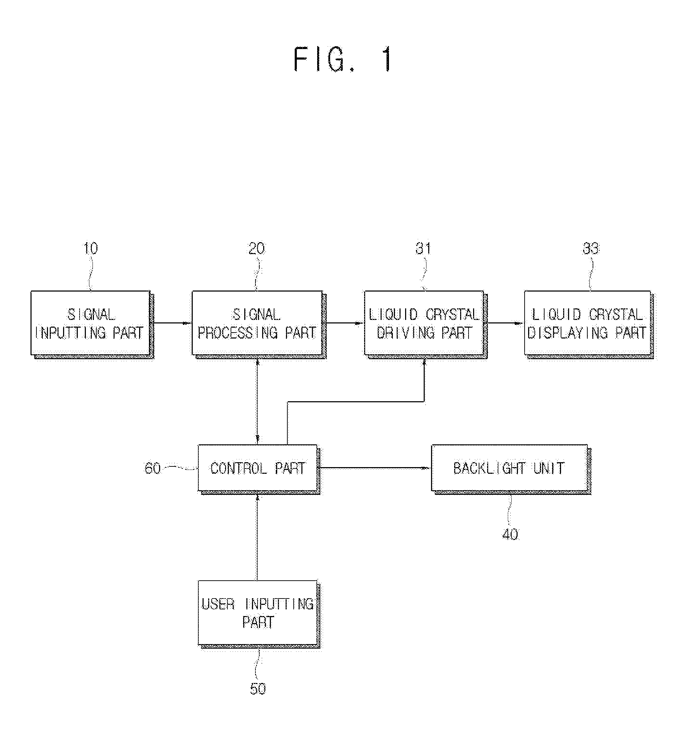

As shown in FIG. 1, a display apparatus according to an exemplary embodiment of the present invention comprises a signal inputting part 10, a signal processing part 20, a liquid crystal driving part 31, a liquid crystal displaying part 33, a backlight unit 40, a user inputting part 50 and a control part 60.

The signal inputting part 10 according to the present exemplary embodiment receives a video signal, and may comprise a tuner (not shown) receiving a broadcasting signal, and an external connecting terminal (not shown) receiving the video signal from an external device.

Here, the external connecting terminal may comprise connectors of various types to receive the video signals of various formats. For example, the signal inputting part 10 may comprise at least one of a D-sub connector, a composite video baseband signal (CVBS) connector, an S-video connector and a component connector for receiving a video signal.

The signal processing part 20 processes the video signal inputted from the signal inputting part 10, and supplies the video signal to a display module depending on control of the control part 60.

Various functions may be added to the signal processing part 20 to correspond to a format of the inputted video signal. For example, the signal processing part 20 may comprise an A/D converting function converting the inputted video signals having various formats into a digital video signal having a predetermined format, a digital decoding function, a scaling function receiving a digital video signal, and/or an analog video signal and adjusting vertical frequency, resolution, picture ratio, etc. so as to be compatible with an output standard of the display module, and a predetermined format converting function.

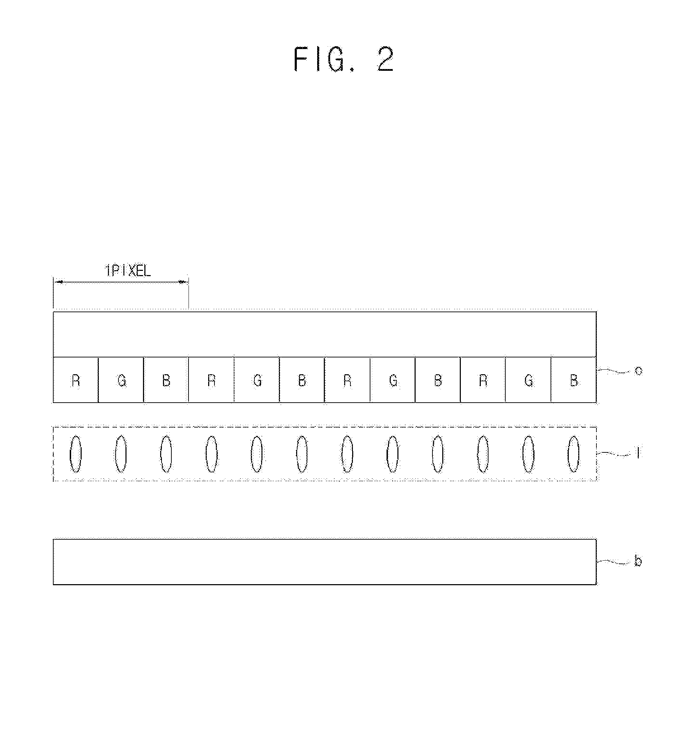

The signal processing part 20 according to the present exemplary embodiment may further comprise a user interface (UI) generating part generating a predetermined UI menu for supplying a user interface to a user. The liquid crystal displaying part 33 displays the video signal, and may comprise a liquid crystal display (LCD), or other various configurations. As shown in FIG. 2, the liquid crystal displaying part 33 according to the present exemplary embodiment comprises a liquid crystal 1 and a color filter c.

The liquid crystal driving part 31 drives the liquid crystal displaying part 33, and adjusts a transmitting ratio by which a light emitted from the backlight unit 40 is transmitted to the color filter c to produce a corresponding color of the video signal. Here, the liquid crystal driving part 31 may adjust an angle of the liquid 1 of the liquid crystal displaying part 33 to adjust the transmitting ratio.

The backlight unit 40 illuminates the liquid crystal displaying part 33, and comprises a plurality of light emitting elements emitting various colored lights. The light emitting element according to the present exemplary embodiment comprises a light emitting diode (hereinafter, referred to as 'LED').

The LED may comprise a red light emitting diode (R-LED) emitting a light having a red wavelength, a green light emitting diode (G-LED) emitting a light having a green wavelength, and a blue light emitting diode (B-LED) emitting a light having a blue wavelength.

Here, each colored LED (R-LED, G-LED and B-LED) is arranged in a predetermined pattern in the backlight unit 40. For example, each colored LED (R-LED, G-LED and B-LED) may be arranged in a pattern of R-G-G-B-R-G-G-B-R-G-G-B...... in sequence along a traverse direction of the liquid crystal displaying part 33, or may be arranged in patterns of R-G-B......, R-R-G......, R-G-B-B......, etc. Also, each colored LED (R-LED, G-LED and B-LED) may be arranged in other arrangements for further optimization taking into consideration a property of each colored LED (R-LED, G-LED and B-LED), for example, a maximum brightness of light, etc. so that the liquid crystal displaying part 33 can properly express a natural colored image.

Also, the LEDs (R-LED, G-LED and B-LED) may be provided as densely as possible to correspond to each pixel of the liquid crystal displaying part 33. Accordingly, the brightness or color of an image displayed by the liquid crystal displaying part 33 can be improved according to the color of the LEDs (R-LED, G-LED and B-LED) emitting the light among the LEDs (R-LED, G-LED and B-LED) disposed in the rear of each pixel or the intensity of the light emitted to thereby improve the contrast of the image displayed.

The backlight unit 40 may further comprise an LED driving part (not shown) driving the LEDs. The LED driving part controls lighting of each LED (R-LED, G-LED and B-LED), and the intensity of the light emitted from the LEDs depending on control of the control part 60. Here, the LED driving part may control an amount of current applied to each LED (R-LED, G-LED and B-LED) to adjust the intensity of the light emitted from each LED (R-LED, G-LED and B-LED).

Also, the LED driving part may comprise a horizontal driving part (not shown) and a vertical driving part (not shown) for controlling lighting of each LED (R-LED, G-LED and B-LED) and the intensity of light emitted from the LEDs depending on control of the control part 60. Each LED (R-LED, G-LED and B-LED) may be controlled depending on combination of signals from the horizontal driving part and the vertical driving part so that on and off of the lighting and the intensity of light can be adjusted locally on the liquid crystal displaying part 33.

The user inputting part 50, which is used to select a demo function displaying an operating state of the backlight unit 40 to the liquid crystal displaying part 33, may comprise a key provided to a remote controller or a casing, and a key signal generating part generating a key signal to correspond to an activation of the key.

The control part 60 controls the liquid crystal driving part 31 to display the operating state of the backlight unit 40 emitting the light in accord with the inputted video signal to the liquid crystal displaying part 33, and may comprise a controller such as a central processing unit CPU, a microcomputer, etc.

In detail, if the video signal is inputted, the control part 60 controls the backlight unit 40 by using gray scale information included to the inputted video signal. That is, the control part 60 controls an LED driving part (not shown) to adjust the amount of the light the LED emits. Here, since the backlight unit 40 comprises the LED, the liquid crystal displaying part 33 can emit and adjust the light locally, thereby controlling brightness.

Also, the control part 60 controls the liquid crystal driving part 31 so that the operating state of the backlight unit 40 can be displayed to the liquid crystal displaying part 33. That is, the control part 60 controls the liquid crystal driving part 31 to adjust a refractive index of the liquid crystal included to the liquid crystal displaying part 33 so that transmission of light from the backlight unit 40 can be adjusted. Here, if the demo function is selected through the user inputting part 50, the control part 60 may control so that the operating state of the backlight unit 40 can be displayed to the liquid crystal displaying part 33.

Here, if the control part 60 controls the liquid crystal displaying part 31 so that the color of the video signal is the same in each pixel, the liquid crystal driving part 31 equalizes the refractive index of the liquid crystal 1 for each pixel, and the operating state of the backlight unit 40 is displayed.

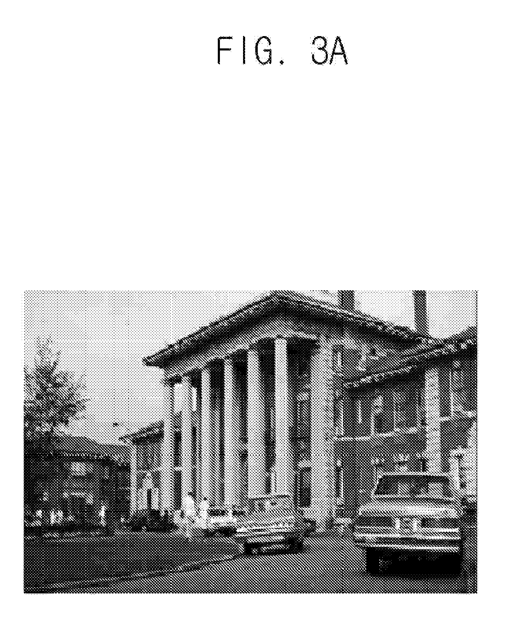

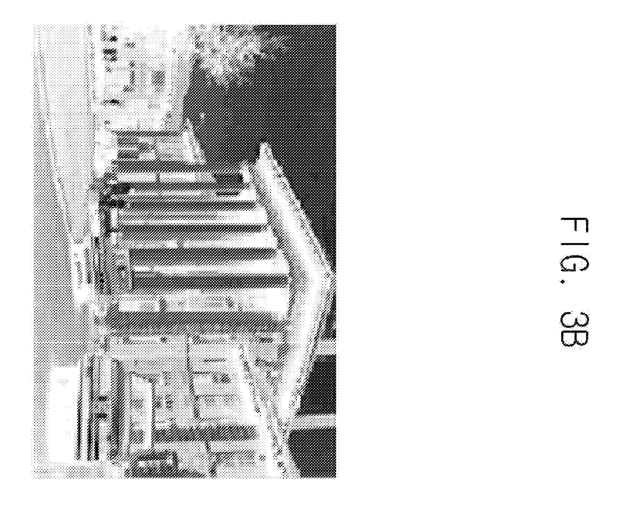

For example, FIG. 3A illustrates an image from the inputted video signal processed by a general method. Here, as shown in FIG. 3B, if the refractive index of the liquid crystal 1 of each pixel is adjusted to be 90 degrees, since the color of the video signal is changed to be displayed in full-white, the operating state of the backlight unit 40 can be confirmed.

Here, if the refractive index of the liquid crystal 1 with respect to only one color of the color filter c is adjusted to be 90 degrees, the operating state of the backlight unit 40 with respect to the one color of the video signal may be displayed. For example, if the refractive index of the liquid crystal 1 corresponding to the red color filter c is adjusted to be 90 degrees, and the refractive index of the remaining liquid crystals 1 corresponding to the other colors is adjusted to be 0 degrees, the operating state of the backlight unit 40 with respect to the red is displayed.

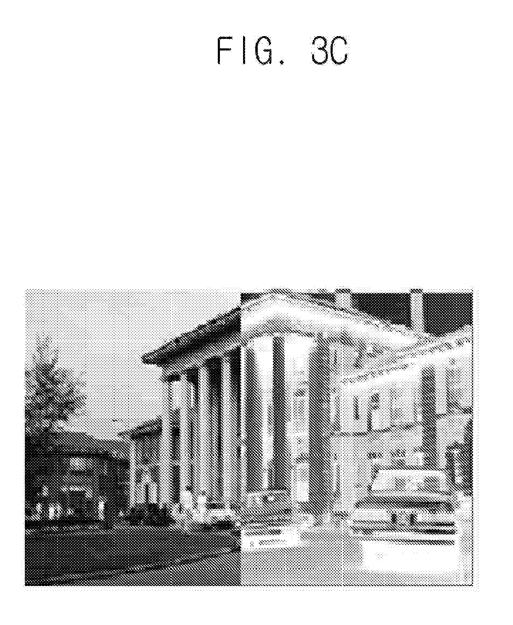

Also, the control part 60 may control such that the demo function is displayed to a local region of the liquid crystal displaying part 33. For example, as shown in FIG. 3C, the inputted video signal normally processed may be displayed to a local region of the liquid crystal displaying part 33, and the operating state of the backlight unit 40 may be displayed to the remaining region thereof.

While executing the demo function, the control part 60 may adjust brightness and contrast by means of adjusting controlled by a user. That is, contrast may be adjusted by changing difference between a maximum value and a minimum value of brightness in all cells of the backlight unit 40 to correspond to contrast adjusted from the user inputting part 50. Also, an entire brightness may be adjusted by changing an average value of brightness in all cells of the backlight unit 40 to correspond to brightness adjusted from the user inputting part 50.

Accordingly, a user can visually and directly confirm the operating state of the backlight unit 40 so that the user can directly understand the superiority of a product to distinguish the produce from other products.

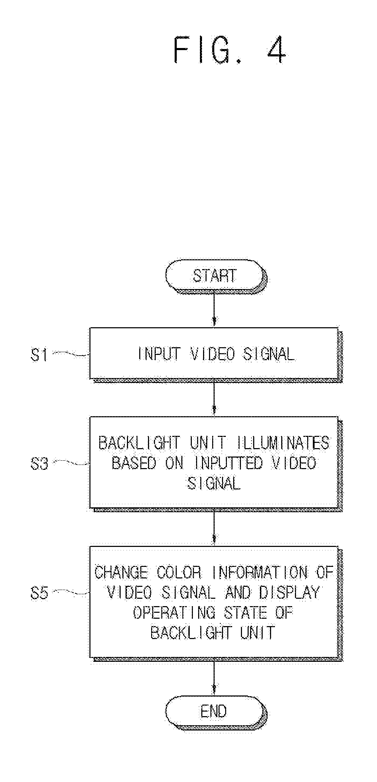

Hereinafter, a control method of the display apparatus according to the exemplary embodiment of the present invention will be described by referring to FIG. 4.

As shown in FIG. 4, if the video signal is inputted (S1), the backlight unit 40 is controlled to illuminate based on the inputted video signal (S3).

Then, the liquid crystal driving part 31 is controlled to change the color of the video signal so that an operating state of the backlight unit 40 can be displayed to the display part (S5). As described above, the control part 60 may control the liquid crystal driving part 31 so that each pixel in the liquid crystal 1 can have the same refractive index. Accordingly, the operating state of the backlight unit 40 illuminating each pixel based on the video signal can be directly displayed to the display part.

If the demo function is selected through the user inputting part 50, the control part 60 may display the operating state of the backlight unit 40 to the liquid crystal displaying part 33.

Accordingly, a user can visually and directly confirm effect of a local dimming of the backlight unit 40 so that user can directly understand the superiority of a product.

As described above, the present invention provides a display apparatus and a control method thereof directly showing a user performance of a product comprising a light emitting diode for a backlight unit so that the user can easily know a merit of employing the light emitting diode for the backlight unit.

Also, the present invention provides a display apparatus and a control method thereof allowing a user to easily distinguish the superiority of a product when a user visits a shop to buy the product, thereby improving the sales of the product.

Although a few exemplary embodiments of the present invention have been shown and described, it will be appreciated by those skilled in the art that changes may be made in these exemplary embodiments without departing from the principles and spirit of the invention, the scope of which is defined in the appended claims and their equivalents.

## Claims

1. A display apparatus, comprising:
a display part;
a backlight unit which illuminates the display part locally; and
a control part which controls the backlight unit to illuminate based on an input video signal, and changes a color information of the input video signal so that an operating state of the backlight unit is displayed on the display part.

2. The display apparatus according to claim 1, wherein the control part changes the color information of the input video signal which corresponds to a local region of the display part into one of white, red, green and blue colors.

3. The display apparatus according to claim 2, further comprising a user input part which selects a demo function which displays the operating state of the backlight unit on the display part,
wherein the control part changes the color information of the input video signal if the demo function is selected from the user inputting part.

4. The display apparatus according to claim 3, wherein the control part changes the color information of the input video signal which corresponds to a local region of the display part so that the operating state of the backlight unit is displayed on the local region of the display part.

5. The display apparatus according to claim 1, wherein the control part changes a difference between a local maximum value and a local minimum value of brightness in a local region of the backlight unit to adjust contrast of the backlight unit.

6. The display apparatus according to claim 1, wherein the control part changes a local average value of brightness in a local region of the backlight unit to adjust brightness of the backlight unit.

7. The display apparatus according to claim 1, wherein the backlight unit comprises a plurality of light emitting diodes (LED), and an LED driving part which drives the light emitting diodes.

8. A control method of a display apparatus which includes a display part and a backlight unit which illuminates the display part locally, comprising:
illuminating the backlight unit based on an input video signal if the input video signal is input; and
changing a color information of the input video signal so that an operating state of the backlight unit is displayed on the display part.

9. The control method of the display apparatus according to claim 8, wherein the changing the color information of the video signal comprises changing the color information of the input video signal into one of white, red, green and blue colors.

10. The control method of the display apparatus according to claim 9, wherein the changing the color information of the video signal comprises changing the color information of the input video signal if a demo function which displays the operating state of the backlight unit on the display part is selected by a user.

11. The control method of the display apparatus according to claim 10, wherein the changing the color information comprises changing the color information of the input video signal which corresponds to a local region of the display part so that the operating state of the backlight unit is displayed on the local region of the display part.

12. The control method of the display apparatus according to claim 8, wherein the backlight unit includes a plurality of light emitting diodes (LED), and an LED driving part which drives the light emitting diodes.

13. A display apparatus, comprising:
a liquid crystal displaying part;
a liquid crystal driving part which drives the liquid crystal displaying part;
a backlight unit which illuminates the liquid crystal displaying part locally; and
a control part which controls the backlight unit to emit a light based on an input video signal, and controls the liquid crystal driving part so that the light emitted from the backlight unit is transmitted uniformly to local regions of the liquid crystal displaying part.

14. The display apparatus according to claim 13, wherein the liquid crystal displaying part comprises a liquid crystal, and
the control part controls the liquid crystal driving part so that a refractive index of the liquid crystal which corresponds to local regions of the liquid crystal displaying part is the same.

15. The display apparatus according to claim 14, wherein the control part controls the liquid crystal driving part so that a local region of the liquid crystal displaying part displays one color among white, red, green and blue colors.

16. The display apparatus according to claim 13, further comprising a user input part which selects a demo function in which the light emitting from the backlight unit is displayed to the liquid crystal displaying part,
wherein the control part controls the liquid crystal driving part so that the light emitted from the backlight unit is transmitted uniformly to the local regions of the liquid crystal displaying part if the demo function is selected from the user input part.

17. The display apparatus according to claim 16, wherein the control part controls the liquid crystal driving part so that the refractive index of a liquid crystal which corresponds to each local region of the liquid crystal displaying part is the same.

18. The display apparatus according to claim 13, wherein the control part changes a difference between a local maximum value and a local minimum value of brightness in a local region of the backlight unit to adjust contrast of the backlight unit.

19. The display apparatus according to claim 13, wherein the control part changes a local average value of brightness in a local region of the backlight unit to adjust brightness of the backlight unit.

20. The display apparatus according to claim 13, wherein the backlight unit comprises a plurality of light emitting diodes (LED), and an LED driving part which drives the light emitting diodes.
